# EUROPEAN PATENT SPECIFICATION

(11) **EP 1 510 476 B1**
(45) Date of publication and mention of the grant of the patent: **02.05.2007**
(21) Application number: 04077412.7
(22) Date of filing: 25.08.2004
(51) Int. Cl.: B65G 1/04

(54) **Method and apparatus for the handling of loads**
Verfahren und Vorrichtung zum Handhaben von Lasten
Procédé et dispositif de menutention de charges

(30) Priority: 27.08.2003 FI 20031206
(43) Date of publication of application: 02.03.2005
(73) Proprietor: Awa Advanced Warehouse Automation Oy, 01601 Vantaa (FI)
(72) Inventor: Oksanen, Pekka, 02620 Espoo (FI)
(74) Representative: Laine, Terho Tapio

(56) References cited:
- JP-A- 11 208 815
- PATENT ABSTRACTS OF JAPAN vol. 1999, no. 13, 30 November 1999 (1999-11-30) & JP 11 208815 A (NIPPON YUSOKI CO LTD), 3 August 1999 (1999-08-03)

## Description

### Background of the invention

The present invention relates to a method as defined in the preamble of claim 1 for moving loads, especially cylindrical objects, such as web product rolls, in a sorted manner into a storage location, where the loads are brought and stored and from where the loads are moved out in a horizontal position on a transfer car for further treatment.

JP 11208815 discloses a slide fork of a stacker crane. The slide fork is intended for exchanging a cylindrical load between any rack of an automated high-rise warehouse and the carriage inside a stacker crane travelling along the automated high-rise warehouse. The slide fork is intended to move only one load at a time.

Cylindrical objects, such as paper rolls or similar objects, are handled and arranged e.g. after a slitter-winder. By means of a slitter-winder, the web product, such as a paper product or adhesive laminate, is cut from a larger roll in the longitudinal direction of the web to produce narrower rolls of the width desired by the customer. Since a customer order can not necessarily be fulfilled from a single large roll or the customer order includes roll widths that can not be cut in evenly distributed numbers from a large roll, the same large roll is often cut into rolls intended for different deliveries. The rolls thus cut off then have to be arranged into the right outgoing transport at the latest before delivery of the orders. A need for sorting and re-grouping arises from the variety of roll sizes, transportation routes and clients. The sorting capacity must be high and the system has to be flexible to be able to adapt to variations in customer orders and changes in the product to be manufactured.

In paper industry, the typical means mainly used so far for handling in the case of larger rolls are sorting ramp systems and various rack storage arrangements. A sorting ramp system comprises an inclined surface, along which the rolls are rolled. The ramp surface is provided with stoppers usually fitted in several rows. The stoppers can be lifted up from the surface at desired positions, allowing a rolling roll to be stopped at a desired stopper position. Provided at the lower end of the ramp system is usually a conveyor for carrying the sorted roll further.

In applications designed for smaller rolls, in which a slitter-winder is used to cut a large roll into narrower rolls, such as e.g. in the case of adhesive laminate rolls, manual sorting has also been applied.

In prior-art solutions, the rolls have to be rotated during sorting, so the identification data, such as bar-coded data, usually marked on the rolls in connection with slitting may remain on the underside of the roll and the roll has to be turned to bring the markings into sight when the identification data is to be read. This is difficult and requires extra work. Moreover, different sorting ramp systems typically require a relatively large space. They are not usable especially in the case of narrow rolls.

The object of the present invention is to create a completely new type of method to avoid the drawbacks of prior-art solutions. A further object is to produce a solution that can be used to easily and flexibly serve several slitter-winders even in the case of narrow rolls.

### Brief description of the invention

The method of the invention is in its broadest scope characterized by claim 1.

The method of the invention is additionally characterized by what is disclosed in claims 2 - 6.

The solution of the invention has numerous significant advantages. In the solution of the invention, the rolls can be easily arranged into desired storage locations for further treatment. In the solution of the invention, the identification data always remain in sight. The solution of the invention can be applied in connection with a plurality of slitter-winders. In the solution of the invention, it is possible to use several sorting carriages on the same track, so the system can be flexibly adapted to applications of different types regarding capacity. The invention makes it possible to minimize the idle time of the slitter-winder. The product delivery cycle is shortened and the material loss resulting from rotating the rolls is reduced.

In the present application, load refers generally to a product to be stored. According to a preferred embodiment, the load is a cylindrical object, such as a paper roll. Longitudinal direction of the roll means the direction of the axis, i.e. axial direction of the roll.

### Brief description of the figures

In the following, the invention will be described in detail with reference to an example and the attached drawing, wherein
Fig. 1 is a diagrammatic illustration of an embodiment of the invention,
Fig. 2 presents a side view of the transfer car of the apparatus of the invention with its supporting elements in a low position
Fig. 3 presents a side view of the transfer car of the apparatus of the invention with its supporting elements in a load supporting position, and
Fig. 4 presents a detail of the supporting elements of the transfer car in an oblique top view.

### Detailed description of the invention

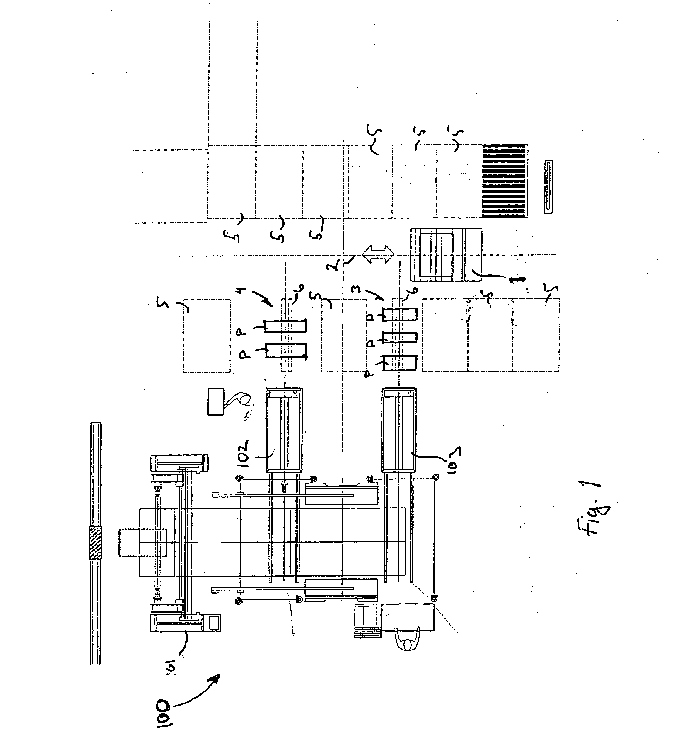

Fig. 1 presents a layout of the system of the invention in top view. On the left in the figure is a slitter-winder apparatus 100 not included in the invention and slitter carriages 102, 103 comprised in it. The slitter carriages 102, 103 are so implemented as to be movable between a reeling position and an unloading position. In the unloading position, the slitter carriages move the rolls P already cut off to an unloading station 3, 4. At the unloading station 3, 4, the slit rolls P rest on supporting elements 6, typically in succession in the longitudinal direction of the rolls. The rolls P may be so arranged in succession that successive rolls follow each other immediately or spaced by given distances, a desired distance being thus provided between successive rolls.

The method of the invention concerns an arrangement for moving loads P, especially cylindrical objects, such as web product rolls, in a sorted manner into a storage location 5, where the loads are brought and stored and from where the loads are removed in a horizontal position on a transfer car 1 for further treatment. According to an embodiment of the method, at least one load P or a combination of a number of loads arranged in succession at a time is moved on a transfer car 2 from the supply location 3, 4 into a storage location 5 and/or from a storage location, the loads P being moved onto the transfer car 1 substantially in their longitudinal direction and correspondingly left in the storage location 5 in a longitudinal orientation. According to a preferred embodiment of the method, the loads P are picked up for transfer into a storage location 5 from a supply location, such as the previous stage of manufacture of the product, especially from the unloading station 3, 4 of the slitter-winder of a web product.

In an embodiment, the combination of several loads P may comprise cylindrical products, such as web product rolls, of different widths. The combination of several loads P may also comprise cylindrical products, such as web product rolls, having different diameters.

The loads P are typically sorted by means of at least one transfer car 1 and/or at least one storage location 5 to form desired combinations of cylindrical objects to be placed in at least one other storage location 5.

According to a second preferred embodiment, the loads P used are web product rolls, such as adhesive laminate rolls, and the unloading stations 3, 4 are the unloading stations of a slitter-winder 100.

According to a preferred embodiment of the apparatus of the invention, the transfer car is provided with load handling means for moving at least one load P or combination of loads arranged in succession at a time on the transfer car into a storage location 5 and/or from a storage location in such manner that the loads P are moved onto the transfer car 1 substantially in the longitudinal direction and correspondingly left in the storage location 5 in a longitudinal orientation. The load handling elements of the transfer car 1 have been arranged extend to the unloading/storage locations 3, 4, 5, which are disposed on opposite sides of the track 2 of the car 1.

According to a preferred embodiment, the transfer car 1 is provided with an auxiliary support 11 to prevent the load P from moving into the space between the storage location 5 and the transfer car 1 when the load is being introduced or removed from the storage location. In a preferred embodiment, the auxiliary support extends substantially to the height of the base 6 of the storage location.

The load handling means are supporting surfaces 7.1, 8.1 arranged to rest on supporting elements 7, 8 that are movable along linear motion elements, such as rail or bar elements 9, 10, from the transfer car 1 into a storage location 5 and/or into an unloading station 3, 4, on either side of the track 2.

Arranged to move in the system of the invention is a transfer car 1 provided with load handling means. The means for handling a load, especially a cylindrical object, such as a web product roll, have been arranged to move transversely relative to the main directions of motion of the car. The load handling means have been arranged to take from the unloading station 3, 4 of the slitter-winder roll assemblies comprising at least one roll P, typically several rolls, and, based on information supplied, to sort out the rolls for storage in a desired storage location 5, e.g. on a customer-specific basis or according to other criteria. In Fig. 1, several storage locations 5 are provided on either side of the track 2 of the transfer car 1.

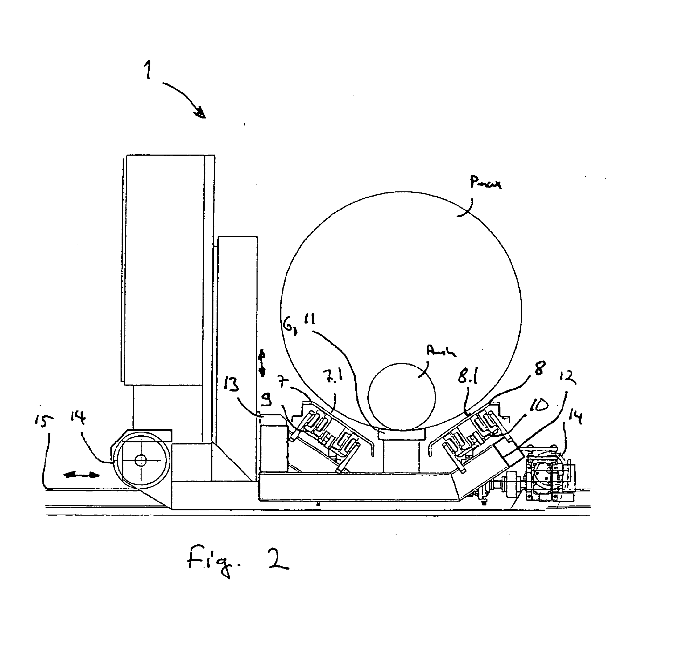

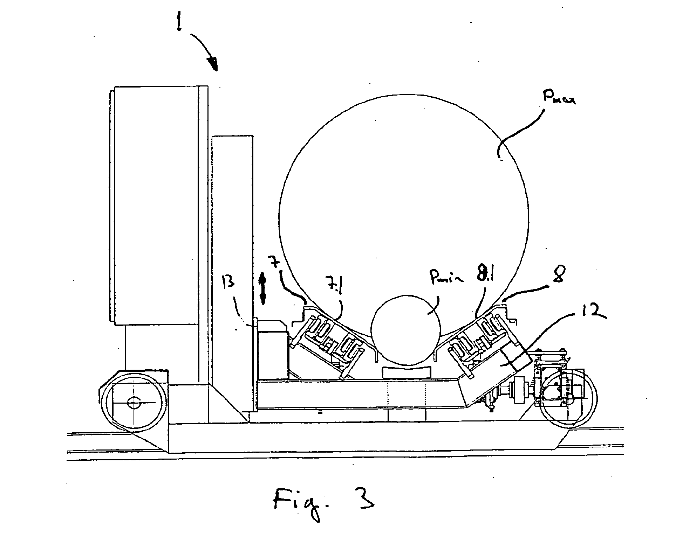

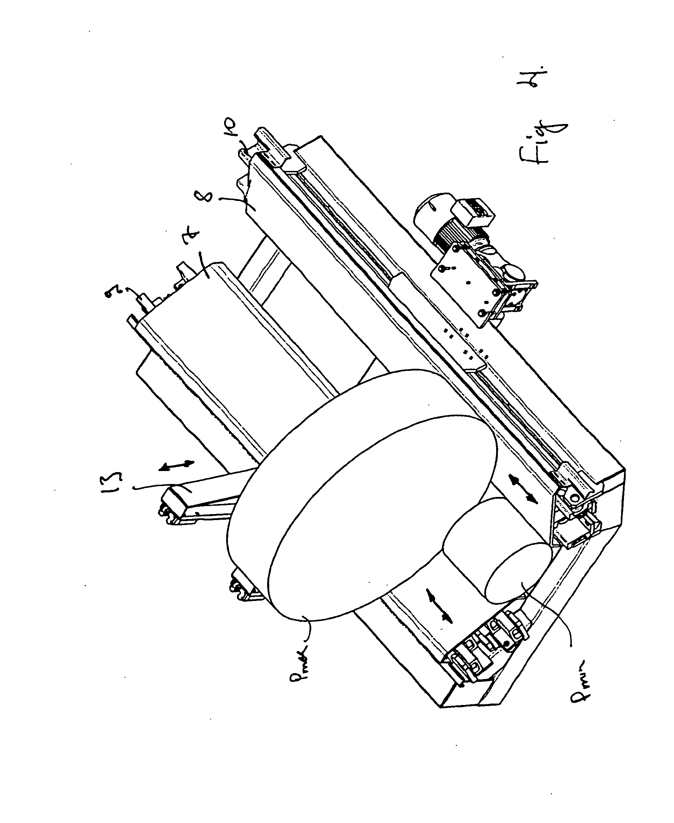

Thus, the transfer car 1 moves between its supply location (unloading station 3, 4 of the slitter-winder) and the storage locations 5 along a passage 2, such as a track. The car is able to handle a roll P typically having an axial length of several meters or a roll assembly cut to varying widths. The diameter of the rolls P to be handled may also vary typically e.g. between 0.4 m - 1.5 m and their length between 0.1 m - 2 m (5m). Figures 2, 3 and 4 show in the same figure diagrammatic representations of typical diameters of loads P in an embodiment: a large roll diameter Pmax and a small roll diameter Pmin.

When the transfer car 1 is fetching rolls from the unloading station 3, 4 of the slitter-winder, it moves along the track 2 to a position opposite the unloading station 3, 4. The load handling means are moved in the transverse direction of the track 2, i.e. usually in the longitudinal direction of the roll P, to a position below the roll and then lifted up, leaving the rolls resting on the supporting surfaces of the load handling means.

The transfer car 1 moving the load P in the solution of the invention is presented in Fig. 2. The transfer car 1 comprises means 14 for moving the car unit along a desired passage, such as a track 15. In the embodiment illustration in the figure, the moving means comprise roller elements 14 and a drive means for driving the roller elements. Moreover, the transfer car comprises at least one lifting element 13. Typically, the lifting element 13 is used for lifting and/or lowering the load P from/to the base of the supply location or storage location. The load handling means comprise two supporting surfaces disposed at a distance from each other in the main direction of travel of the car. The supporting surfaces 7.1, 8.1 are preferably inclined towards each other, thus ensuring that a cylindrical load P, such as a paper roll, will rest firmly on the supporting surfaces 7.1, 8.1. The surfaces 7.1, 8.1 against which the load will rest have been arranged to support a cylindrical object P in a lying position. Thus, for example, they have been fitted to be in tangential contact with the side surface of the object P. The surfaces 7.1, 8.1 supporting the load P have been arranged to support the load from opposite sides of a possible base 6. In other words, the supporting surfaces are mounted on supporting elements 7, 8, which are movable in a transverse direction relative to the track 2 of the transfer car along linear motion elements, such as rails 9, 10, or bar elements, which, when pushed out to a first side, extend to the unloading location 3, 4, and similarly when pushed out to a second side, they extend to the storage location 5, which locations are disposed on opposite sides of the track 2. The supporting elements 7, 8 are typically arranged to be movable on telescopically elongable linear motion elements, such as rails or equivalent components. In addition, the supporting elements 7.1, 8.1 are disposition on a supporting frame 12 which is vertically movable in the car while supported by the lifting means 13.

When the transfer car 1 leaves the roll P, it is typically parked with the help of sensors and/or radar devices at a position relative to the storage location and/or the rolls stored in it.

The method and apparatus of the invention thus allow simultaneous handling and arrangement of several rolls typically using only one transfer car.

Consequently, it is possible to take rolls onto the transfer car throughout the length of the loading device in an unlimited number and to leave a desired arbitrary number of rolls at different storage locations. For example, of ten rolls taken on simultaneously, it is possible to leave 1 - 10 rolls at different storage locations, distributed in a desired way. When necessary, the solution of the invention can be used to combine e.g. rolls from different storage locations so as to form a desired combination or rolls.

Also, when a storage location is to be emptied, a desired number of rolls can be delivered forward by a single retrieval operation, the maximum number being the number of rolls that can be simultaneously accommodated on the loading device.

It is obvious to the person skilled in the art that the invention is not limited to the embodiments described above, but that it may be varied within the scope of the claims presented below.

## Claims

1. A method for moving loads (P), especially cylindrical objects, such as web product rolls, in a sorted manner into a storage location (5), where the loads are brought and stored and from where the loads are moved out in a horizontal position on a transfer car for further treatment, in such manner that the loads (P) are moved onto the transfer car (1) in their longitudinal direction and correspondingly left in the storage location (5) in longitudinal orientation, **characterized in that** a combination of several loads (P) arranged in succession at a time is moved in a sorted manner, based on information supplied, from a supply location (3, 4) into a desired storage location (5) and/or from the storage location on a transfer car (2).

2. A method according to claim 1, **characterized in that**, in the method, the loads (P) are mainly picked up for transfer into the storage location (5) from the unloading station (3, 4) of a previous stage, such as the slitter-winder of a web product.

3. A method according to claim 1 or 2, **characterized in that** the combination of several loads (P) comprises cylindrical products of different widths, such as web product rolls.

4. A method according to any one of claims 1 - 3, **characterized in that** the combination of several loads (P) comprises cylindrical products having mutually different diameters, such as web product rolls.

5. A method according to any one of claims 1 - 4, **characterized in that** the loads (P) are sorted by means of at least one transfer car (1) and/or at least one storage location (5) to form desired combinations of cylindrical objects to be placed in another storage location (5).

6. A method according to any one of claims 1 - 5, **characterized in that** the loads (P) used are web product rolls, such as adhesive laminate rolls, and the unloading stations (3, 4) are the unloading stations of a slitter-winder (100).

## Patentansprüche

1. Verfahren zum Bewegen von Lasten (P), insbesondere von zylindrischen Objekten wie aufgerollten, bahnförmigen Produkten, in sortierter Weise in einen Lagerplatz (5), in welchen die Lasten in horizontaler Position auf einem Umsetzwagen für weitere Maßnahmen bewegt und gelagert werden und aus welchem sie in der selben Position herausbewegt werden, derart, dass die Lasten (P) in ihrer Längsrichtung auf den Umsetzwagen (1) verbracht und in entsprechender Weise in Längsrichtung in dem Lagerplatz (5) belassen werden, **dadurch gekennzeichnet, dass** eine Kombination verschiedener Lasten (P), die zu einem Zeitpunkt aufeinander folgend angeordnet sind, auf sortierte Weise, basierend auf zur Verfügung gestellter Information, von einem Zuführungsort (3,4) in einen gewünschten Lagerplatz (5) und/oder von dem Lagerplatz auf einen Umsetzwagen (2) verbracht werden.

2. Verfahren nach Anspruch 1, **dadurch gekennzeichnet, dass** in dem Verfahren die Lasten (P) hauptsächlich von dem Entladeplatz (3,4) einer vorhergehenden Stufe, beispielsweise der Längsschneide-Aufwickelvorrichtung eines bahnförmigen Produkts, für das Verbringen in den Lagerplatz (5) aufgenommen werden.

3. Verfahren nach Anspruch 1 oder 2, **dadurch gekennzeichnet, dass** die Kombination verschiedener Lasten (P) zylindrische Produkte verschiedener Breiten, beispielsweise aufgerollte, bahnförmige Produkte, umfasst.

4. Verfahren nach einem der Ansprüche 1 bis 3, **dadurch gekennzeichnet, dass** die Kombination verschiedener Lasten (P) zylindrische Produkte umfasst, die im Vergleich zueinander unterschiedliche Durchmesser aufweisen, beispielsweise aufgerollte, bahnförmige Produkte.

5. Verfahren nach einem der Ansprüche 1 bis 4, **dadurch gekennzeichnet, dass** die Lasten (P) mit Hilfe mindestens eines Umsetzwagens (1) und/oder mindestens eines Lagerplatzes (5) sortiert werden, um gewünschte Kombinationen von zylindrischen Objekten zum Anordnen in einem anderen Lagerplatz (5) zu bilden.

6. Verfahren nach einem der Ansprüche 1 bis 5, **dadurch gekennzeichnet, dass** die verwendeten Lasten (P) aufgerollte, bahnförmige Produkte sind, beispielsweise Kleblaminat-Rollen, und dass die Entladestationen (3,4) die Entladestationen einer Längsschneide-Aufwickelvorrichtung sind.

## Revendications

1. Procédé pour déplacer des charges (P), en particulier des objets cylindriques, tels que des rouleaux de produits de toile, d'une manière déterminée dans un lieu de stockage (5), où les charges sont amenées et stockées et d'où les charges sont enlevées dans une position horizontale sur un chariot transbordeur pour un traitement ultérieur, de telle manière que les charges (P) sont déplacées sur le chariot transbordeur (1) dans leur direction longitudinale et en conséquence laissées dans le lieu de stockage (5) dans l'orientation longitudinale, **caractérisé en ce qu'**une combinaison de plusieurs charges (P) disposées successivement, en une fois, est déplacée d'une façon déterminée, sur la base des informations fournies, depuis un lieu d'approvisionnement (3, 4) jusqu'à un lieu de stockage souhaité (5) et/ou depuis le lieu de stockage sur un chariot transbordeur (2).

2. Procédé selon la revendication 1, **caractérisé en ce que**, dans le procédé, les charges (P) sont principalement prises pour être transférées dans le lieu de stockage (5) à partir du poste de déchargement (3, 4) d'un stade antérieur, tel que la coupeuse bobineuse d'un produit en toile.

3. Procédé selon la revendication 1 ou 2, **caractérisé en ce que** la combinaison de plusieurs charges (P) comprend des produits cylindriques de différentes largeurs, tels que des rouleaux de produits de toile.

4. Procédé selon l'une quelconque des revendications 1 à 3, **caractérisé en ce que** la combinaison de plusieurs charges (P) comprend des produits cylindriques ayant des diamètres mutuellement différents, tels que des rouleaux de produits de toile.

5. Procédé selon l'une quelconque des revendications 1 à 4 **caractérisé en ce que** les charges (P) sont triées au moyen d'au moins un chariot transbordeur (1) et/ou d'au moins un lieu de stockage (5) pour former les combinaisons souhaitées d'objets cylindriques à placer dans un autre lieu de stockage (5).

6. Procédé selon l'une quelconque des revendications 1 à 5, **caractérisé en ce que** les charges (P) utilisées sont des rouleaux de produits de toile, tels que des rouleaux de laminé adhésif, et **en ce que** les postes de déchargement (3, 4) sont les postes de déchargement d'une coupeuse bobineuse (100).
